# EUROPEAN PATENT SPECIFICATION

(11) **EP 4 339 029 B1**
(45) Date of publication and mention of the grant of the patent: **30.07.2025**
(21) Application number: 23187858.8
(22) Date of filing: 26.07.2023
(51) Int. Cl.: B60R 3/02, B61D 23/02, E06C 5/20

(54) **FOLDABLE LADDER FOR INDUSTRIAL VEHICLE AND RELATED INDUSTRIAL VEHICLE**
KLAPPBARE LEITER FÜR INDUSTRIEFAHRZEUGE UND ENTSPRECHENDE INDUSTRIEFAHRZEUGE
ÉCHELLE PLIABLE POUR VÉHICULE INDUSTRIEL ET VÉHICULE INDUSTRIEL

(30) Priority: 19.09.2022 IT 202200019089
(43) Date of publication of application: 20.03.2024
(73) Proprietor: Takler S.r.l., 70022 Altamura (BA) (IT)
(72) Inventor: BARATTINI, Daniele, I-70022 Altamura, BARI (IT); GRECO, Luca Oronzo, I-70022 Altamura, BARI (IT)
(74) Representative: Mitola, Marco

(56) References cited:
- DE-A1- 102016 115 690
- US-A1- 2010 012 433
- US-A1- 2010 089 698
- US-A1- 2016 101 817
- US-B1- 7 025 174

## Description

### FIELD OF APPLICATION

The present invention relates to a foldable ladder, in particular for industrial vehicles, such as vans, trucks, haulers, tractor trailers, and the like, and to the related industrial vehicle comprising said ladder.

### BACKGROUND ART

As known, ladders of various types (fixed, retractable, foldable) are used to gain access to the cargo compartment platform of industrial vehicles, which can be normally folded and stowed under the vehicle platform when not in use. When necessary, said ladders are extracted and/or folded so as to allow access to the respective steps.

Obviously, the ladders must be lightweight, convenient to extract and retract, as well as cost-effective to make and assemble.

Moreover, such ladders must have highly small encumbrances when they are stowed in a retracted condition, otherwise they would affect the usable volume of the cargo compartment.

Moreover, when stowed in the retracted condition, such ladders must not vibrate or move excessively, to avoid causing annoying noises while the vehicle is traveling.

Currently, the market does not have solutions that can fully meet all the needs listed above. Solutions according to the preamble of claim 1 are disclosed by DE 10 2016 115690 A1. US2010012433A shows a further telescoping ladder assembly.

### PRESENTATION OF THE INVENTION

The need is thus felt to solve the drawbacks and limitations mentioned above with reference to the prior art.

Such needs are met by a foldable ladder according to claim 1 and by an industrial vehicle according to claim 14.

### DESCRIPTION OF THE DRAWINGS

Further features and advantages of the present invention will be more comprehensible from the following description of preferred embodiments thereof, given by way of non-limiting examples, in which:
figure 1 is a perspective view of a foldable ladder according to a first embodiment of the present invention, in a closing configuration;
figures 2-5 are perspective views of the ladder in figure 1, in successive opening steps;
figure 6 is a perspective view of a foldable ladder, according to a second embodiment of the present invention, in a closing configuration;
figures 7-9 are perspective views of the ladder in figure 6 in successive opening steps.

The elements or parts of elements common to the embodiments described hereafter will be indicated using the same reference numerals.

### DETAILED DESCRIPTION

With reference to the aforesaid figures, reference numeral 4 indicates as whole a foldable ladder, in particular for an industrial vehicle 8.

In particular, the industrial vehicle 8 comprises a platform 12 having an upper face 16, which defines a climbing plane for a cargo compartment 18, and a lower face 20, opposite to said upper face 16. As described in greater detail below, the ladder 4 is preferably fixed to the platform 12 of the vehicle 8, at the lower face 20 thereof. The ladder 4 is usually employed to allow a user to climb onto the vehicle platform starting from the walking surface on which the tires of the vehicle typically rest.

The foldable ladder 4 comprises an interface frame 24 comprising a pair of tracks 28 associable with the platform 12 of the vehicle 8, preferably on the side of said lower face 20. Said tracks 28 extend along a main longitudinal direction Y-Y. In the assembly configuration, said tracks 28 are parallel to the lower face 20 of the platform 12. The tracks 28 can be connected to each other by one or more crossbars or not.

The ladder 4 further comprises a summit portion 32 slidingly housed in said interface frame 24, along said main longitudinal direction Y- Y, provided with a pair of rails 36 at least partially sliding on said tracks 28.

In particular, the rails 36 of the summit portion 32 are parallel to said tracks 28.

For example, said tracks 28 comprise longitudinal slots 30 and the rails 36 comprise guide pins 38 slidingly associated in said longitudinal slots 30 so as to slide parallel to said main longitudinal direction Y-Y.

The ladder 4 comprises a first climbing element 40, provided with uprights 44 and a first step 48.

The first climbing element 40 is hinged to said summit portion 32 at first transverse hinges 52, directed along a transverse direction X-X perpendicular to the main longitudinal direction Y-Y. Preferably, said first step 48 is provided with an extraction handle 50.

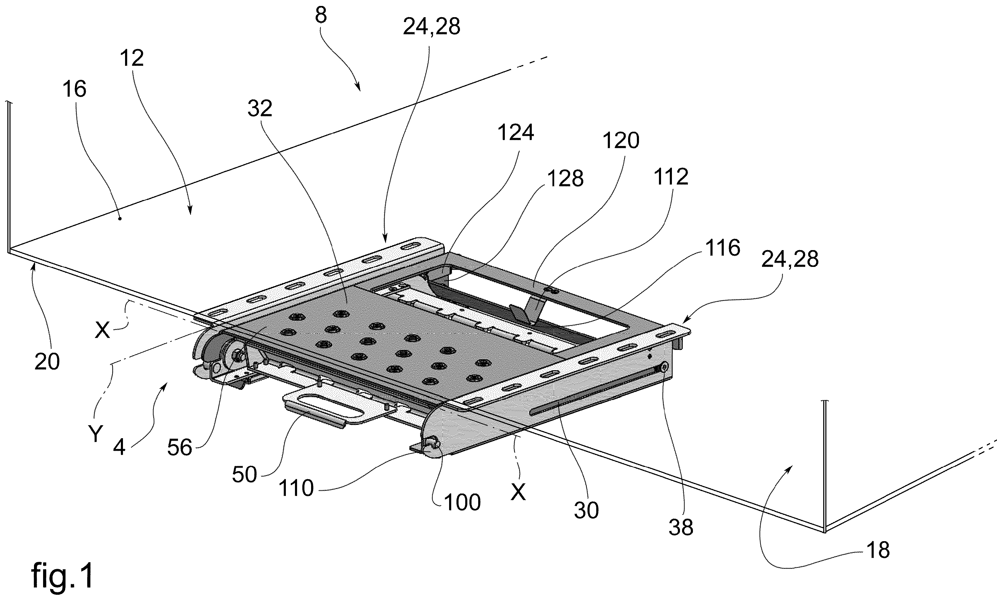

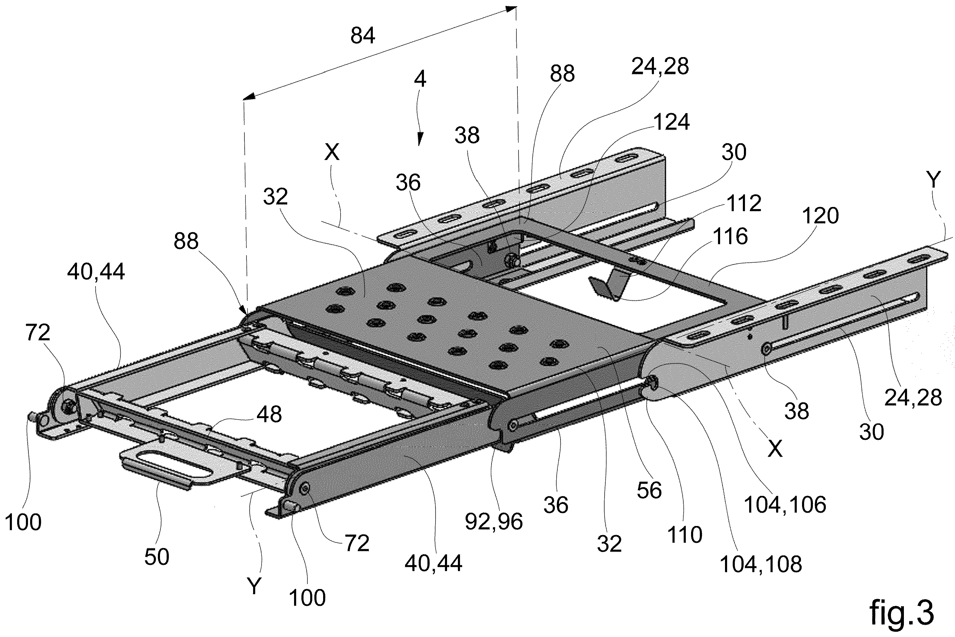

According to a possible embodiment (figures 1-5), the summit portion 32 comprises a support platform 56 which transversely connects said rails 36 on the side of the first climbing element 40.

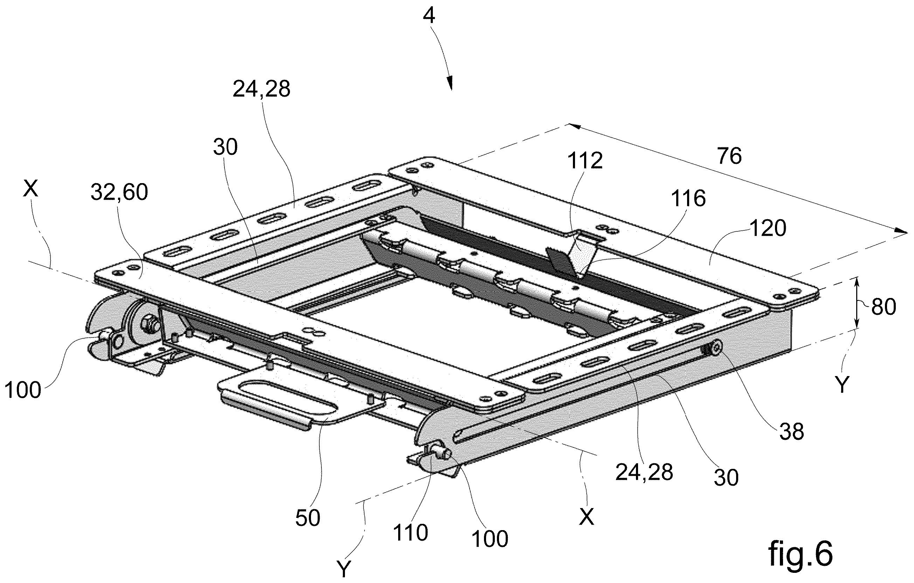

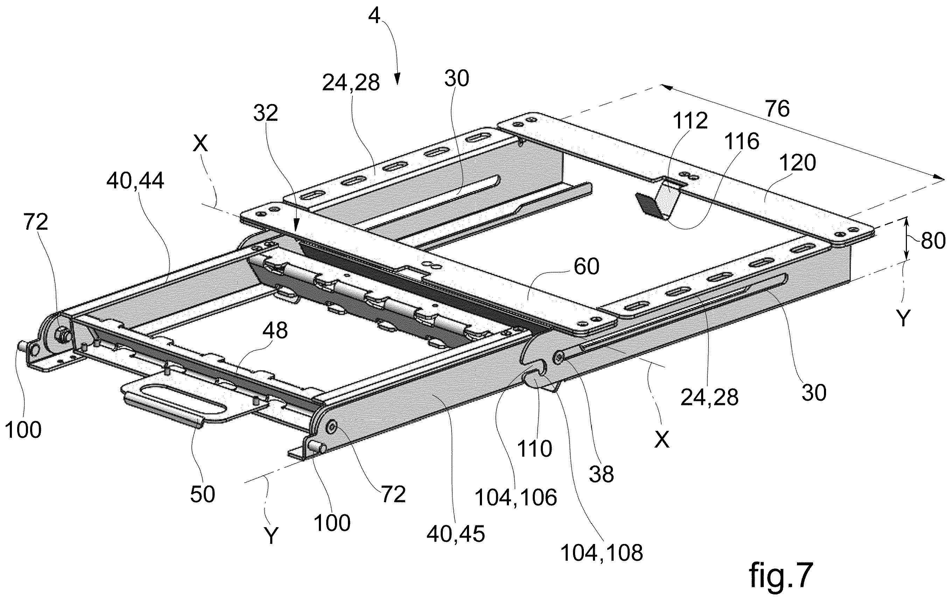

According to a further embodiment (figures 6-9), the summit portion 32 is devoid of platform and is provided with a front beam 60 which transversely connects said rails 36 on the side of the first climbing element 40. Further constructional variations are possible with an increasing number of steps and with/without a platform.

The ladder 4 further comprises a second climbing element 64, provided with uprights 44 and a second step 68, and hinged to said first climbing element 40 at second transverse hinges 72, directed parallel to said transverse direction X-X.

Advantageously, the second climbing element 64 is foldable on said first climbing element 40 on a front access or climbing side of said steps 48, 68, so as to switch from an opening configuration, in which the uprights 44 of the second climbing element 64 are arranged parallel and adjacent to the uprights 44 of the first step 48, to a closing configuration, in which the uprights 44 of the second climbing element 64 are arranged paired and superimposed on the uprights 44 of the first climbing element 40.

According to a possible embodiment, said uprights 44 and said steps 48,68 of the first climbing element 40 and the second climbing element 64 are configured so that, in the closing configuration, they fall within an encumbrance or transverse distance 76 of the tracks 28 of the interface frame 24, measured parallel to said transverse direction X-X.

According to a possible embodiment, said uprights 44 and said steps 48,68 of the first climbing element 40 and the second climbing element 64 are configured so that, in the closing configuration, they fall within a vertical encumbrance 80 of the tracks 28 of the interface frame 24, measured perpendicular to said transverse direction X-X and to said main longitudinal direction Y-Y.

According to a possible embodiment, said uprights 44 of the first climbing element 40 and the second climbing element 64 have a longitudinal length 84, parallel to said main longitudinal direction Y-Y, less than or equal to a longitudinal extension 88 of said rails 36 and/or said tracks 28 of the interface frame 24.

The rails 36 of the summit portion 32, at the front ends 92, are provided with front gaps 96 adapted to abut against respective transverse pins 100 associated with the uprights 44 of the first climbing element 40 (in said closing configuration).

According to a possible embodiment, said tracks 28 comprise front seats 104 having an 'L' shape and provided with a longitudinal upper section 106 and a vertical lower section 108. Said front seats 104 are configured to receive said transverse pins 100 and lock them in said vertical lower section 108, in a closing configuration of the ladder 4. In particular, said vertical lower section 108 has a longitudinal undercut 110 which opposes the extraction of the first climbing element 40 in the main longitudinal direction Y-Y.

According to a possible embodiment, at least one central belt spring 112 is fixed to said summit portion 32, adapted to achieve an undercut lock with said second step 68, in said closing configuration. Said central belt spring 112 ensures the function of a second safety lock, with a snap lock perceptible clearly and distinctly by the user both mechanically (by snapping) and audibly ("click effect"). This minimizes the risk of a ladder being mistakenly left not fully closed on the vehicle before resuming driving.

For example, said central belt spring 112 has a 'V' shape, so that a vertex 116 of said 'V' forms said undercut.

For example, said central belt spring 112 is fixed cantilevered to a rear beam 120 of the summit portion 32, opposite to the first climbing element 40.

According to a possible embodiment, lateral locking springs 124 are provided, integral and cantilevered with respect to rear ends 128 of the rails 36 of the summit portion 32, adapted to achieve an undercut coupling between the rails 36 and the tracks 28 of the interface frame 24, in said closing configuration.

For example, said lateral locking springs 124 are belt springs with a 'V' shape, so that a vertex 116 of said 'V' achieves said undercut coupling.

According to a possible embodiment, the steps 48,68 are fixed to the uprights 44 of the corresponding climbing elements 40,64 by means of rivets.

Preferably, the steps 48, 68 are fixed to the uprights 44 of the corresponding climbing elements 40,64 by means of rear rivets (instead of lateral ones).

In particular, the first and second steps 48 and 68 are fixed to the uprights 44 of the corresponding climbing elements 40, 64 by means of countersunk rivets. The 'L'-shaped profiles 44 have one long side and one short side. Countersunk holes required for the insertion of the rivets, adapted to fix the steps themselves, are present outside the short side. Using rear rivets (instead of lateral rivets) allows the assembly consisting of step 68 and side uprights 64 to be rotate on the second transverse hinges 72 and be housed within the uprights 44, without interfering with the first step 48.

According to a possible embodiment, the tracks 28, the summit portion 32, and said climbing elements 40, 64 are made of magnelis^{®}. In particular, using pre-galvanized steel, there is no need for any anti-rust treatment after processing.

The operation of a foldable ladder according to the present invention will now be described.

For completeness, reference will be made to the figures of both embodiments of the present invention, which have an entirely similar opening/closing sequence.

In particular, we will start with the retracted or folded configuration in which the ladder is folded underneath the platform of the cargo compartment of the vehicle.

In greater detail (figures 1 and 6), in the retracted or closing configuration, the second climbing element 64 is superimposed and folded over the first climbing element 40; both climbing elements 40,64 are inserted longitudinally into the summit portion 32 which, in turn, is housed between the tracks 28 of the interface frame 24.

The locking configuration is ensured by the fact that the transverse pins 100 associated with the uprights 44 of the first climbing element 40 are housed and locked in the front seats 104 of the tracks 28.

Moreover, by virtue of the 'L' configuration of the frontal seats 104, the transverse pins 100 are housed in the vertical lower section 108, which has the longitudinal undercut 110 opposing the extraction of the first climbing element 40 to operate the opening of the ladder 4.

Moreover, in the closing configuration, the summit portion 32 bears on the folded assembly consisting of the first climbing element 40 and the second climbing element 64 with its own weight. Here, the summit portion biases the transverse pins 100 to remain housed in the vertical lower section 108, so that they are subjected to the action of the longitudinal undercut 110 which opposes the extraction or opening of the ladder 4.

Moreover, in the retracted or closing configuration, the combined bias of the central belt spring 112 and/or the lateral locking springs 124 gives a further safety and locking element of ladder 4.

To open the ladder 4, the operator must then grasp the extraction handle 50 with which to first lift the first climbing element 40 to disengage the transverse pins 100 from the vertical lower sections 108 of the front seats, while also overcoming the weight applied by the summit portion 32.

Moreover, the operator must overcome the spring bias applied by the central belt spring 112 and/or the lateral locking springs 124.

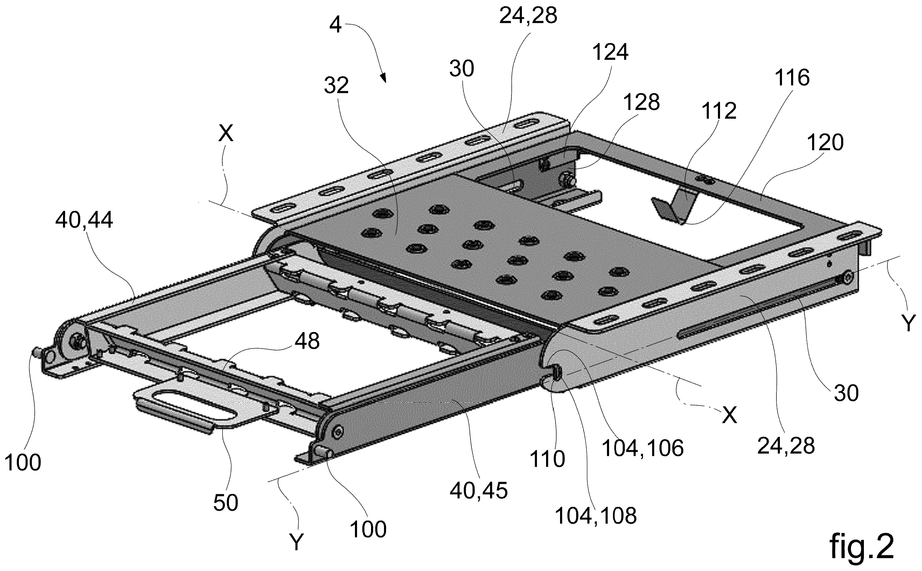

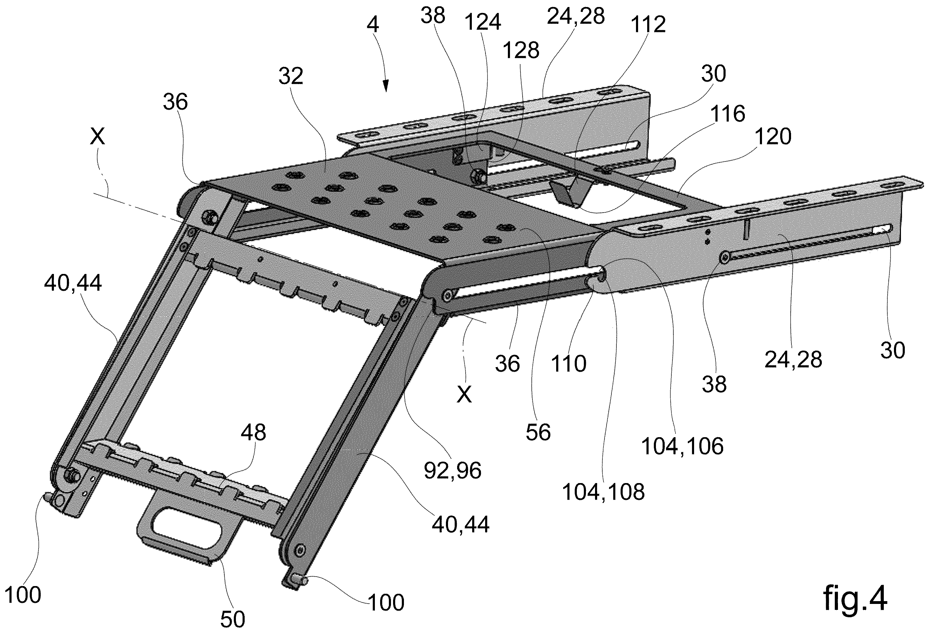

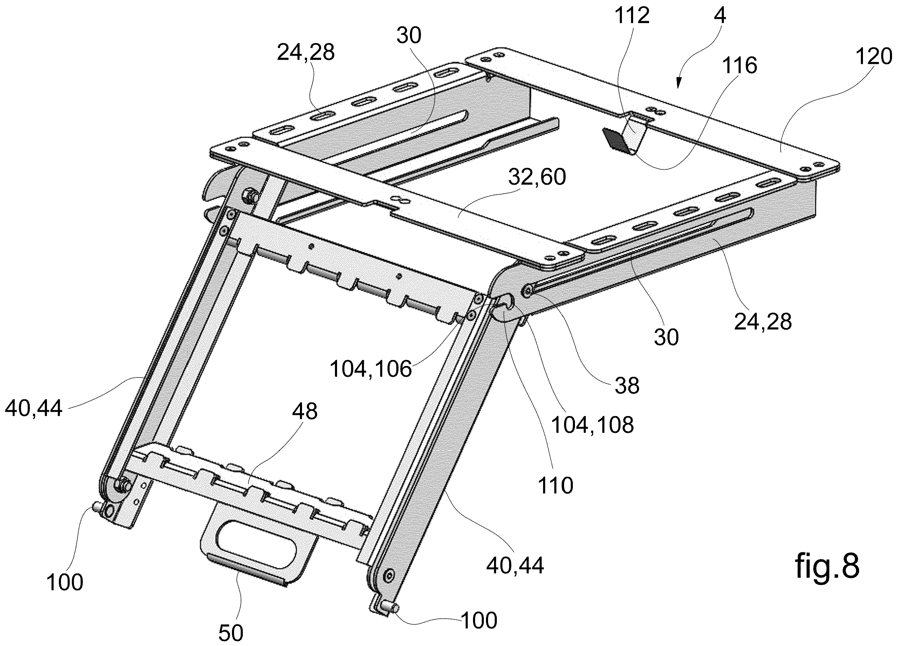

The first climbing element 40 is then extracted longitudinally (figures 2-3 and figure 7) and tilted downwards (figures 4 and 8).

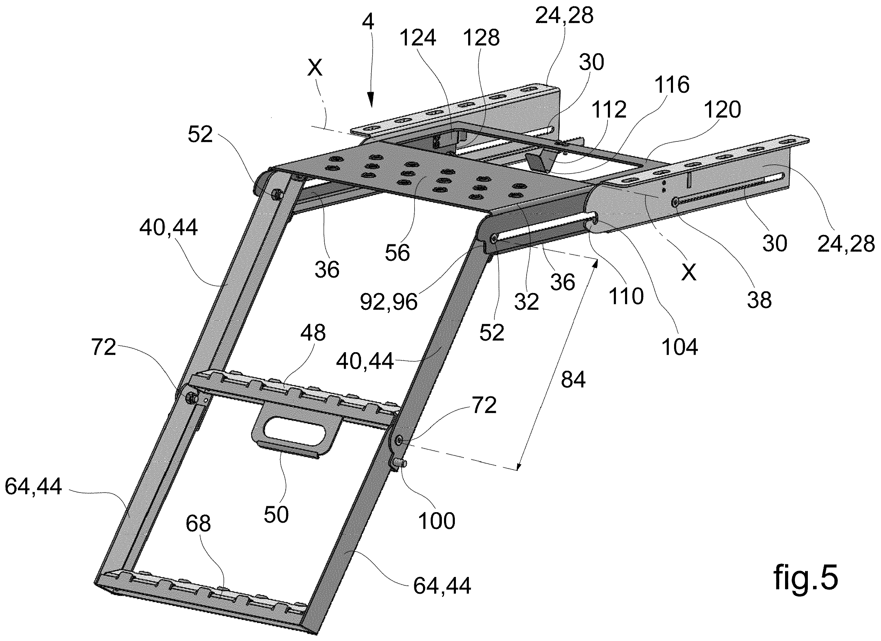

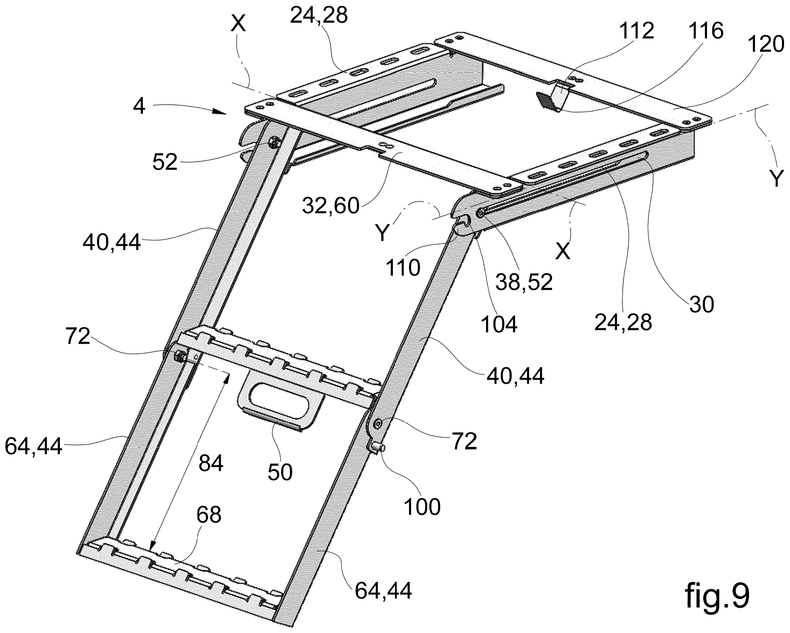

At this point, the second climbing element 64 can be rotated by 180 degrees so as to form a single contiguous climbing ramp between the first climbing element 40 and the second climbing element 64 (figures 5 and 9).

Obviously, for the next closing step, it will be sufficient to reverse the order of the steps described above.

As can be appreciated from the description above, the present invention allows overcoming the drawbacks presented in the prior art.

In particular, the present invention allows for a drastic reduction in encumbrance by virtue of the fact that the second element is not rigid, but rather hinged and foldable/tiltable on the first element. The longitudinal extension of the compartment that must accommodate the ladder in a retracted configuration is thus halved.

In addition to the drastic reduction in encumbrance, the solution brings benefits in terms of logistics by virtue of the modularity in creating 1-step/2-step/3-step variants with or without a platform.

Advantageously, the ladder assembly system with screws and bolts, countersunk rivets for fixed parts, provides for the total absence of welding, unlike the prior art solutions; therefore, on the one hand, assembly costs are reduced, and on the other hand, the risks of dubious finishes and possible rust/crack triggers are reduced.

The use of magnelis^{®} material allows achieving a self-healing effect in case of scratches (e.g., in contact areas, slots, creeps), and does not require the use of specific surface treatments which would increase production costs.

The interface frame with the platform of the vehicle is also simplified in that it comprises only two rails instead of the small frames of the prior art solutions; a further simplification of costs and respective logistics of the ladder components is thus obtained.

The double pin-cradle and platform locking system, by means of the front seats of the rails having an 'L' shape, which by gravity is interlocked in the cradle and locks the ladder together with the bias of the belt springs, ensures a stable and secure fixing of the ladder in the retracted position; the possibility of vibrations and disturbing noises of the parts of the ladder, while the vehicle is traveling, is thus eliminated. In particular, the second spring latch, by virtue of the aforementioned "mechanical lock" and "audible click" effect, also ensures that the risk of it being forgotten not fully closed is minimized or eliminated. Indeed, the user will have learned not to consider it closed until he/she clearly feel the effects mentioned above.

Advantageously, the step is secured to the corresponding climbing element by means of rear rivets instead of lateral rivets; the tilting part is thus avoided from being capable of rotating while the operator climbs up. In particular, as mentioned above, using rear rivets (instead of lateral rivets) allows the assembly consisting of step 68 and side uprights 64 to rotate on the second transverse hinges 72 and to be housed within the uprights 44, without interfering with the first step 48.

In order to meet contingent, specific needs, those skilled in the art may make several changes and variations to the solutions described above.

The scope of protection of the present invention is defined by the following claims.

## Claims

1. Foldable ladder (4) comprising:
- an interface frame (24) comprising a pair of tracks (28) associable with a platform (12) of a vehicle (8), said tracks (28) extending along a main longitudinal direction (X-X),
- a summit portion (32) slidably housed in said interface frame (24), along said main longitudinal direction (X-X), provided with a pair of rails (36) at least partially sliding on said tracks (28),
- a first climbing element (40), provided with uprights (44) and a first step (48), and hinged to said summit portion (32) at first transverse hinges (52), directed along a transverse direction (X-X) perpendicular to the main longitudinal direction (Y-Y),
- a second climbing element (64), provided with uprights (44) and a second step (68), and hinged to said first climbing element (40) at second transverse hinges (72), directed parallel to said transverse direction (X-X),
- the second climbing element (64) being foldable on said first climbing element (40) from a front access or climbing side to said steps (48,68), so as to pass from an opening configuration, in which the uprights (44) of the second climbing element (64) are arranged parallel and adjacent to the uprights (44) of the first step (48), to a closing configuration in which the uprights (44) of the second climbing element (64) are arranged paired and superimposed on the uprights (44) of the first climbing element (40),
**characterized in that**
the rails (36) of the summit portion (32), at the front ends (92), are provided with front gaps (96) adapted to make an abutment with respective transverse pins (100) associated with the uprights (44) of the first climbing element (40).

2. Foldable ladder (4) according to claim 1, wherein said uprights (44) and said steps (48,68) of the first climbing element (40) and of the second climbing element (64) are configured so that, in a closing configuration, they fall within an encumbrance or transverse distance (76) of the tracks (28) of the interface frame (24), parallel to said transverse direction (X-X).

3. Foldable ladder (4) according to claim 1 or 2, wherein said uprights (44) and said steps (48,68) of the first climbing element (40) and the second climbing element (64) are configured so that, in the closing configuration, they fall within a vertical encumbrance (80) of the tracks (28) of the interface frame (24), measured perpendicular to said transverse direction (X-X) and to said main longitudinal direction (Y-Y).

4. Foldable ladder (4) according to claim 1, 2 or 3, wherein said uprights (44) of the first climbing element (40) and the second climbing element (64) have a longitudinal length (84), parallel to said main longitudinal direction (Y-Y), less than or equal to a longitudinal extension (88) of said longitudinal rails (36) and/or said tracks (28) of the interface frame (24).

5. Foldable ladder (4) according to any one of claims 1 to 4, wherein said tracks (28) comprise front seats (104) having an 'L' shape provided with a longitudinal upper section (106) and a vertical lower section (108), said front seats (104) being configured to receive said transverse pins (100) and lock them in said vertical lower section (108), in a closing configuration of the ladder (4).

6. Foldable ladder (4) according to claim 5, wherein the vertical lower section (108) has a longitudinal undercut (110) configured to oppose the extraction of the first climbing element (40) in the main longitudinal direction (Y-Y), to operate the opening of the ladder (4).

7. Foldable ladder (4) according to any one of claims 1 to 6, wherein at least one central belt spring (112) is fixed to said summit portion (32), adapted to make an undercut lock with said second step (68), in said closing configuration, wherein said central belt spring (112) has a 'V' shape, so that a vertex (116) of said 'V' makes said undercut.

8. Foldable ladder (4) according to any one of claims 1 to 7, wherein lateral locking springs (124) are included, integral and cantilevered with respect to rear ends (128) of the rails (36) of the summit portion (32), adapted to make an undercut coupling between the rails (36) and the tracks (28) of the interface frame (24), in said closing configuration, wherein said lateral locking springs (124) are belt springs with a 'V' shape, so that a vertex (116) of said 'V' makes said undercut coupling.

9. Foldable ladder (4) according to any one of claims 1 to 8, wherein said tracks (28) comprise longitudinal slots (30) and the rails (36) comprise guide pins (38) slidably associated in said longitudinal slots (30) so as to slide parallel to said main longitudinal direction (Y-Y) .

10. Foldable ladder (4) according to any one of claims 1 to 9, wherein the steps (48,68) are fixed to the uprights (44) of the corresponding climbing elements (40,64) by means of rivets.

11. Foldable ladder (4) according to any one of claims 1 to 10, wherein the summit portion (32) is provided with a support platform (56) which transversely connects said rails (36) from the side of the first climbing element (40).

12. Foldable ladder (4) according to any one of claims 1 to 11, wherein the summit portion (32) is provided with a front beam (60) which transversely connects said rails (36) from the side of the first climbing element (40).

13. Foldable ladder (4) according to any one of claims 1 to 12, wherein the tracks (28), the summit portion (32), and said climbing elements (40,64) are made of magnelis^{®}.

14. Industrial vehicle (8) comprising a platform (12) having an upper face (16) defining a climbing plane and a lower face (20), opposite said upper face (16), the vehicle (8) comprising a foldable ladder (4) according to any one of claims 1 to 13, wherein the tracks (28) of the interface frame (24) of the ladder (4) are fixed to the platform (12) at said lower face (20).

## Patentansprüche

1. Klappbare Leiter (4), umfassend:
- einen Verbindungsrahmen (24) umfassend ein Paar von Schienen (28), die einer Plattform (12) eines Fahrzeugs (8) zugeordnet werden können, wobei sich die Schienen (28) entlang einer Hauptlängsrichtung (X-X) erstrecken,
- einen oberen Abschnitt (32), der entlang der Hauptlängsrichtung (X-X) in dem Verbindungsrahmen (24) gleitend aufgenommen ist, der mit einem Paar von Führungsschienen (36) versehen ist, die mindestens teilweise auf den Schienen (28) gleiten,
- ein erstes Kletterelement (40), das mit Holmen (44) und einer ersten Stufe (48), versehen ist und das mit dem oberen Abschnitt (32) an ersten Querscharnieren (52) verbunden wird, die zu einer Querrichtung (X-X) zugewandt sind, die senkrecht zu der Hauptlängsrichtung (Y-Y) ist,
- ein zweites Kletterelement (64), das mit Holmen (44) und einer zweiten Stufe (68), versehen ist und das mit dem ersten Kletterelement (40) an zweiten Querscharnieren (72) verbunden wird, die parallel zu der Querrichtung (X-X) zugewandt sind,
- wobei das zweite Kletterelement (64) auf das erste Kletterelement (40) von einem Frontzugang oder Kletterseite zu den Stufen (48, 68) klappbar ist, um von einer Öffnungskonfiguration, in der die Holme (44) des zweiten Kletterelements (64) parallel und angrenzend an den Holmen (44) der ersten Stufe (48) angeordnet sind, in eine Schließkonfiguration überzugehen, in der die Holme (44) des zweiten Kletterelements (64) paarweise und überlagert zu den Holmen (44) des ersten Kletterelements (40) angeordnet sind,
**dadurch gekennzeichnet, dass**
die Führungsschienen (36) des oberen Abschnitts (32) an den vorderen Enden (92) mit vorderen Leerräumen (96) versehen sind, die eingerichtet sind, eine Auflage mit entsprechenden Querbolzen (100) zu bilden, die den Holmen (44) des ersten Kletterelements (40) zugeordnet sind.

2. Klappbare Leiter (4) nach Anspruch 1, wobei die Holme (44) und die Stufen (48, 68) des ersten Kletterelements (40) und des zweiten Kletterelements (64) dazu konfiguriert sind, sich in einer Schließkonfiguration innerhalb einer Behinderung oder einem Querabstand (76) der Schienen (28) des Verbindungsrahmens (24) zu befinden, die/der parallel zu der Querrichtung (X-X) ist.

3. Klappbare Leiter (4) nach Anspruch 1 oder 2, wobei die Holme (44) und die Stufen (48, 68) des ersten Kletterelements (40) und des zweiten Kletterelements (64) dazu konfiguriert sind, sich in der Schließkonfiguration innerhalb einer vertikalen Behinderung (80) der Schienen (28) des Verbindungsrahmens (24) zu befinden, die senkrecht zu der Querrichtung (X-X) und zu der Hauptlängsrichtung (Y-Y) gemessen wird.

4. Klappbare Leiter (4) nach Anspruch 1, 2 oder 3, wobei die Holme (44) des ersten Kletterelements (40) und des zweiten Kletterelements (64) eine Längserstreckung (84) aufweisen, die sich parallel zu der Hauptlängsrichtung (Y-Y) erstreckt, die kleiner oder gleich einer Längserstreckung (88) der Längsführungsschienen (36) und/oder der Schienen (28) des Verbindungsrahmens (24) ist.

5. Klappbare Leiter (4) nach einem der Ansprüche 1 bis 4, wobei die Schienen (28) Vordersitze (104) aufweisend eine "L"-Form umfassen, die mit einem Längs-Oberabschnitt (106) und einen Vertikal-Unterabschnitt (108) versehen sind, wobei die Vordersitze (104) dazu konfiguriert sind, die Querbolzen (100) aufzunehmen und sie in dem Vertikal-Unterabschnitt (108) in einer Schließkonfiguration der Leiter (4) zu verriegeln.

6. Klappbare Leiter (4) nach Anspruch 5, wobei der Vertikal-Unterabschnitt (108) eine Längshinterschneidung (110) aufweist, die dazu konfiguriert ist, das Herausziehen des ersten Kletterelements (40) in der Hauptlängsrichtung (Y-Y) zu verhindern, um das Öffnen der Leiter (4) zu bewirken.

7. Klappbare Leiter (4) nach einem der Ansprüche 1 bis 6, wobei mindestens eine zentrale Bandfeder (112) an dem Oberabschnitt (32) befestigt wird, die eingerichtet ist, in eine Hinterschneidungsverriegelung in der Schließkonfiguration mit der zweiten Stufe (68) zu bilden, wobei die zentrale Bandfeder (112) eine "V"-Form aufweist, so dass ein Scheitelpunkt (116) des "V" die Hinterschneidung herstellt.

8. Klappbare Leiter (4) nach einem der Ansprüche 1 bis 7, wobei seitliche Verriegelungsfedern (124) vorgesehen sind, die einstückig und vorstehend in Bezug auf die hinteren Enden (128) der Führungsschienen (36) des Oberabschnitts (32) ausgebildet sind und die eingerichtet sind, eine Hinterschneidungskupplung zwischen den Führungsschienen (36) und den Schienen (28) des Verbindungsrahmens (24) in der Schließkonfiguration herzustellen, wobei die seitlichen Verriegelungsfedern (124) Bandfeder mit einer "V"-Form sind, so dass ein Scheitelpunkt (116) des "V" die Hinterschneidungskupplung herstellt.

9. Klappbare Leiter (4) nach einem der Ansprüche 1 bis 8, wobei die Schienen (28) Längsschlitze (30) umfassen und die Führungsschienen (36) Führungsstifte (38) umfassen, die in den Längsschlitzen (30) gleitend zugeordnet sind, so dass sie parallel zu der Hauptlängsrichtung (Y-Y) gleiten.

10. Klappbare Leiter (4) nach einem der Ansprüche 1 bis 9, wobei die Stufen (48, 68) mittels Nieten an den Holmen (44) der entsprechenden Kletterelemente (40, 64) befestigt sind.

11. Klappbare Leiter (4) nach einem der Ansprüche 1 bis 10, wobei der Oberabschnitt (32) mit einer Stützplattform (56) versehen ist, die die Führungsschienen (36) von der Seite des ersten Kletterelements (40) quer verbindet.

12. Klappbare Leiter (4) nach einem der Ansprüche 1 bis 11, wobei der Oberabschnitt (32) mit einer Vorderstange (60) versehen ist, die die Führungsschienen (36) von der Seite des ersten Steigelements (40) quer verbindet.

13. Klappbare Leiter (4) nach einem der Ansprüche 1 bis 12, wobei die Schienen (28), der Oberabschnitt (32) und die Kletterelemente (40, 64) aus Magnelis^{®} bestehen.

14. Industriefahrzeug (8), umfassend eine Plattform (12) aufweisend eine Oberseite (16), die eine Kletterebene definiert, und einer Unterseite (20), die der Oberseite (16) gegenüberliegt, wobei das Fahrzeug (8) eine klappbare Leiter (4) nach einem der Ansprüche 1 bis 13 umfasst, wobei die Schienen (28) des Verbindungsrahmens (24) der Leiter (4) an der Plattform (12) an der Unterseite (20) befestigt sind.

## Revendications

1. Échelle pliable (4) comprenant :
- un cadre d'interface (24) comprenant une paire de rails (28) pouvant être associés à une plateforme (12) d'un véhicule (8), lesdits rails (28) s'étendant selon une direction longitudinale principale (X-X),
- une partie sommitale (32) logée de manière coulissante dans ledit cadre d'interface (24), selon ladite direction longitudinale principale (X-X), pourvue d'une paire de glissières (36) au moins partiellement coulissantes sur lesdits rails (28),
- un premier élément d'escalade (40), pourvu de montants (44) et d'un premier échelon (48), et articulé à ladite partie sommitale (32) au moyen de premières articulations transversales (52), dirigées selon une direction transversale (X-X) perpendiculaire à la direction longitudinale principale (Y-Y),
- un second élément d'escalade (64), pourvu de montants (44) et d'un second échelon (68), et articulé audit premier élément d'escalade (40) au moyen de secondes articulations transversales (72), dirigées parallèlement à ladite direction transversale (X-X),
- ledit second élément d'escalade (64) étant pliable sur ledit premier élément d'escalade (40) à partir d'un côté frontal d'accès ou d'escalade vers lesdits échelons (48, 68), de manière à passer d'une configuration d'ouverture, dans laquelle les montants (44) du second élément d'escalade (64) sont disposés parallèlement et adjacents aux montants (44) du premier échelon (48), à une configuration de fermeture dans laquelle les montants (44) du second élément d'escalade (64) sont disposés appariés et superposés aux montants (44) du premier élément d'escalade (40),
**caractérisée en ce que**
les glissières (36) de la partie sommitale (32), au niveau des extrémités frontales (92), sont pourvues d'encoches frontales (96) adaptées à former une butée avec des axes transversaux respectifs (100) associés aux montants (44) du premier élément d'escalade (40).

2. Échelle pliable (4) selon la revendication 1, dans laquelle lesdits montants (44) et lesdits échelons (48, 68) du premier élément d'escalade (40) et du second élément d'escalade (64) sont configurés de sorte que, dans une configuration de fermeture, ils s'inscrivent dans un encombrement ou une distance transversale (76) des rails (28) du cadre d'interface (24), parallèle à ladite direction transversale (X-X).

3. Échelle pliable (4) selon la revendication 1 ou 2, dans laquelle lesdits montants (44) et lesdits échelons (48, 68) du premier élément d'escalade (40) et du second élément d'escalade (64) sont configurés de sorte que, dans la configuration de fermeture, ils s'inscrivent dans un encombrement vertical (80) des rails (28) du cadre d'interface (24), mesuré perpendiculairement à ladite direction transversale (X-X) et à ladite direction longitudinale principale (Y-Y).

4. Échelle pliable (4) selon la revendication 1, 2 ou 3, dans laquelle lesdits montants (44) du premier élément d'escalade (40) et du second élément d'escalade (64) présentent une longueur longitudinale (84), parallèle à ladite direction longitudinale principale (Y-Y), inférieure ou égale à une extension longitudinale (88) desdites glissières longitudinales (36) et/ou desdits rails (28) du cadre d'interface (24).

5. Échelle pliable (4) selon l'une quelconque des revendications 1 à 4, dans laquelle lesdits rails (28) comprennent des logements frontaux (104) en forme de « L » pourvus d'une section supérieure longitudinale (106) et d'une section inférieure verticale (108), lesdits logements frontaux (104) étant configurés pour recevoir lesdits axes transversaux (100) et les bloquer dans ladite section inférieure verticale (108), dans une configuration de fermeture de l'échelle (4).

6. Échelle pliable (4) selon la revendication 5, dans laquelle la section inférieure verticale (108) présente une sous-coupe longitudinale (110) configurée pour s'opposer à l'extraction du premier élément d'escalade (40) dans la direction longitudinale principale (Y-Y), pour actionner l'ouverture de l'échelle (4).

7. Échelle pliable (4) selon l'une quelconque des revendications 1 à 6, dans laquelle au moins un ressort central en lame (112) est fixé à ladite partie sommitale (32), adapté à réaliser un verrouillage en sous-coupe avec ledit second échelon (68), dans ladite configuration de fermeture, dans laquelle ledit ressort central en lame (112) présente une forme en « V », de sorte qu'un sommet (116) dudit « V » réalise ladite sous-coupe.

8. Échelle pliable (4) selon l'une quelconque des revendications 1 à 7, dans laquelle des ressorts de verrouillage latéraux (124) sont inclus, solidaires et en porte-à-faux par rapport aux extrémités arrière (128) des glissières (36) de la partie sommitale (32), adaptés à réaliser un accouplement en sous-coupe entre les glissières (36) et les rails (28) du cadre d'interface (24), dans ladite configuration de fermeture, dans laquelle lesdits ressorts de verrouillage latéraux (124) sont des ressorts en lame de forme « V », de sorte qu'un sommet (116) dudit « V » réalise ledit accouplement en sous-coupe.

9. Échelle pliable (4) selon l'une quelconque des revendications 1 à 8, dans laquelle lesdits rails (28) comprennent des fentes longitudinales (30) et les glissières (36) comprennent des axes de guidage (38) associés de manière coulissante dans lesdites fentes longitudinales (30) de manière à coulisser parallèlement à ladite direction longitudinale principale (Y-Y).

10. Échelle pliable (4) selon l'une quelconque des revendications 1 à 9, dans laquelle les échelons (48, 68) sont fixés aux montants (44) des éléments d'escalade correspondants (40, 64) au moyen de rivets.

11. Échelle pliable (4) selon l'une quelconque des revendications 1 à 10, dans laquelle la partie sommitale (32) est pourvue d'une plateforme de support (56) qui relie transversalement lesdites glissières (36) du côté du premier élément d'escalade (40).

12. Échelle pliable (4) selon l'une quelconque des revendications 1 à 11, dans laquelle la partie sommitale (32) est pourvue d'une poutre frontale (60) qui relie transversalement lesdites glissières (36) du côté du premier élément d'escalade (40).

13. Échelle pliable (4) selon l'une quelconque des revendications 1 à 12, dans laquelle les rails (28), la partie sommitale (32), et lesdits éléments d'escalade (40, 64) sont réalisés en Magnelis^{®}.

14. Véhicule industriel (8) comprenant une plateforme (12) présentant une face supérieure (16) définissant un plan d'escalade et une face inférieure (20), opposée à ladite face supérieure (16), le véhicule (8) comprenant une échelle pliable (4) selon l'une quelconque des revendications 1 à 13, dans laquelle les rails (28) du cadre d'interface (24) de l'échelle (4) sont fixés à la plateforme (12) au niveau de ladite face inférieure (20).
